**Europäisches Patentamt**

**European Patent Office**

**Office européen des brevets**

(19)

(11) Veröffentlichungsnummer: **0 287 069 B1**

(12) **EUROPÄISCHE PATENTSCHRIFT**

(45) Veröffentlichungstag der Patentschrift:
**27.02.91 Patentblatt 91/09**

(21) Anmeldenummer: **88105887.9**

(22) Anmeldetag: **13.04.88**

(51) Int. Cl.⁵: **F16B 7/04,** H02B 1/015,
F16C 11/10

(54) **Vorrichtung zur Verbindung zweier Rohre gleichen Durchmessers, deren Mittelachsen einen stumpfen Winkel einschliessen.**

(30) Priorität: **14.04.87 DE 8705530 U**

(43) Veröffentlichungstag der Anmeldung:
**19.10.88 Patentblatt 88/42**

(45) Bekanntmachung des Hinweises auf die
Patenterteilung:
**27.02.91 Patentblatt 91/09**

(84) Benannte Vertragsstaaten:
**CH DE FR GB IT LI**

(56) Entgegenhaltungen:
**CH-A- 282 173**
**FR-A- 2 330 278**
**US-A- 4 150 907**

(73) Patentinhaber: **Siemens Aktiengesellschaft**
**Wittelsbacherplatz 2**
**D-8000 München 2 (DE)**

(72) Erfinder: **Pönisch, Heinz**
**Hirtenweg 6**
**D-7500 Karlsruhe (DE)**

EP 0 287 069 B1

Jouve, 18, rue Saint-Denis, 75001 PARIS

## Beschreibung

Die Erfindung bezieht sich auf eine Vorrichtung zur Verbindung zweier Rohre gleichen Durchmessers, deren Mittelachsen einen stumpfen Winkel einschließen gemäß Oberbegriff des Anspruchs I.

Aus der CH-A-282 173, insbesondere Figur 3, ist eine kugelgelenkartige Verbindung zweier Rohre ungleichen Durchmessers bekannt. Der kugelförmige Gelenkkopf des Kugelgelenks ist im Endstück des Rohrs kleineren Durchmessers befestigt und mit seinem Hals in einer Öffnung im Bodenstück eines U-förmigen Verbindungsstücks schwenkbar gelagert. Zwischen die parallelen Seitenwände des U-förmigen Verbindungsstücks ist das zweite Rohr eingeschoben und mit einer in Bohrungen in den Seitenwänden und im Rohr drehbar gelagerten Exzenterwelle axial verschiebbar gehalten. Ein am Ende des in das Verbindungsstück eingeschobenen Rohrs befindliches Verstärkungsteil mit konkaver sphärischer Einprägung dient als Gelenkpfanne des Kugelgelenks. Durch Drehen der Exzenterwelle läßt sich der Kugelkopf gegen die Gelenkpfanne verspannen und festlegen. Die Verstellmöglichkeit der Verbindungsvorrichtung erstreckt sich, konstruktiv bedingt, nur über einen relativ kleinen Bereich des von den Achsen der Rohre eingeschlossenen Winkels. Die zum Aufbau der bekannten Vorrichtung notwendigen Teile, wie der kugelförmige Gelenkkopf, das Verstärkungsteil mit der Gelenkpfanne und die Exzenterwelle, bedingen eine relativ aufwendige Herstellung.

Schaltpulte oder -tafeln in Schaltwarten werden aus Gründen der Übersichtlichkeit häufig mit polygonalem Grundriß ausgeführt. Die Eckverbindungen der einzelnen Sektionen sind mit möglichster Maßgenauigkeit zusammenzufügen. Als Längsverbindungen werden beim Aufbau der Rahmenteile für die Schaltpult- oder -tafelsektionen im allgemeinen Rohre verwendet, deren Mittelachsen dann jeweils einen stumpfen Winkel einschließen.

Es besteht somit die Aufgabe, eine einfache Vorrichtung zur maß- und winkelgenauen Verbindung der rohrförmigen Gestellteile an den Stoßstellen der aneinandergereihten Sektionen anzugeben.

Eine Lösung der Aufgabe ist mit einer Vorrichtung, die die Merkmale des Anspruchs 1 aufweist, zu erreichen. Die Verbindung der beiden Rohre nach Art eines feststellbaren Kugelgelenks erlaubt einen einfachen Zusammenbau unter genauer Einhaltung der geforderten Winkel- und Rohrendabstände. Die Vorrichtung besteht lediglich aus einem einfach herzustellenden und mit Bohrungen versehenen Blechbiegeteil als Verbindungsstück, einer Schraube, einer Stahlkugel und zwei Spannstiften, die sämtlich als Normteile handelsgängig sind.

Zur Erläuterung der Erfindung ist in den Figuren ein Ausführungsbeispiel dargestellt und im folgenden beschrieben.

Figur 1 zeigt die Teile der Verbindungsvorrichtung in einer Explosionszeichnung,

Figur 2 das Verbindungsstück und

Figur 3 die Vorrichtung in zusammengebautem Zustand in einer perspektivischen Ansicht.

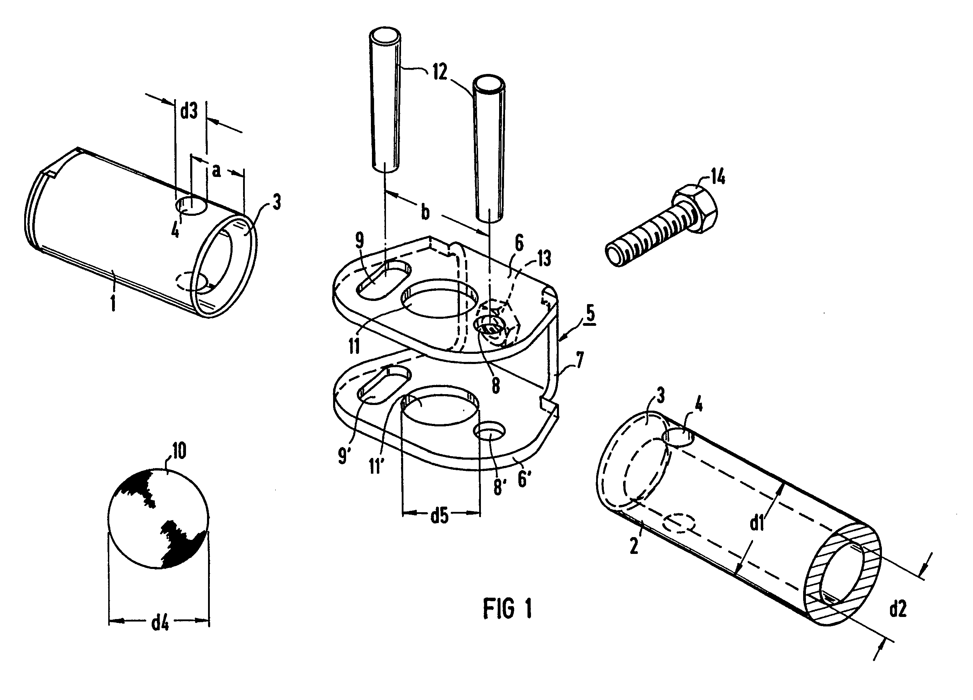

Figur 1 : Die beiden zu verbindenden Rohre 1 und 2 weisen gleiche Außendurchmesser d1 und gleiche Innendurchmesser d2 auf. An ihren Stirnseiten ist bei beiden Rohren eine konische Ausdrehung 3 angebracht. Im Abstand a von seiner Stirnseite ist jedes der Rohre 1 und 2 mit einer Querbohrung 4 mit dem Durchmesser d3 versehen, deren Mittelachse sich rechtwinklig mit der Längsmittelachse des jeweiligen Rohrs kreuzt.

Ein Verbindungsstück 5 ist als ein im Querschnitt U-förmiges Blechbiegeteil ausgebildet und besteht aus den parallelen Seitenwänden 6, 6' und einem diese verbindenden Bodenteil 7. Der Abstand der Innenflächen der Wände 6 und 6' ist wenig größer als der Außendurchmesser d1 der Rohre 1 und 2, so daß diese mit ihren Enden von beiden Seiten in das Verbindungsstück 5 einschiebbar sind.

Durch die parallelen Seitenwände 6, 6' des Verbindungsstücks 5 sind in den Endabschnitten koaxiale Bohrungen 8, 8' ; 9, 9' angebracht, wobei die erste Bohrung 8, 8' einen Durchmesser aufweist, der wenig größer ist als der Durchmesser d3 der Querbohrung 4. Die zweite Bohrung 9, 9' durch den gegenüberliegenden Endabschnitt des Verbindungsstücks 5 ist als Langloch ausgeführt, dessen Funktion später erläutert wird. Zwischen die parallelen Seitenwände 6 und 6' läßt sich eine Stahlkugel 10 mit dem Durchmesser d4 einfügen, die bei der Montage in einer mittig zwischen den Bohrungen 8, 8' und 9, 9' angebrachten achsparallelen Bohrung 11, 11', deren Durchmesser d5 kleiner ist als der Durchmesser d4 der Kugel 10, gehaltert wird.

Als weitere Teile seien die Spannstifte 12 genannt, deren Länge dem Abstand der Außenflächen der parallelen Wände 6 und 6' und deren Durchmesser dem der Querbohrungen 4 entspricht.

In dem Bodenteil 7 des Verbindungsstücks 5 ist eine Gewindebohrung 13, hier in Form einer aufgeschweißten Mutter, angebracht, durch welche eine Schraube 14 eindrehbar ist.

Zur Montage der Verbindung werden nach Einlegen der Kugel 10 in die Bohrung 11 die Rohre 1 und 2 von beiden Seiten in das Verbindungsstück 5 eingeführt, bis die Querbohrungen 4 mit der Mittelachse der ersten Bohrung 8, 8' bzw. mit der Mittelachse der zweiten Bohrung 9, 9' fluchten, sodann werden die Spannstifte 12 eingeschlagen und die Rohre 1 und 2 so in dem Verbindungsstück 5 gelagert.

Der Abstand b zwischen den Mittelachsen der ersten Bohrung 8, 8' und der zweiten Bohrung 9, 9' ist kleiner als die Summe der Abstände a und des Kugeldurchmessers d4. Die Rohre sind so nach Art eines Kugelgelenks zusammengefügt, wobei die konischen Ausdrehungen 3 in den Stirnseiten als Lager für die Kugel 10 wirken.

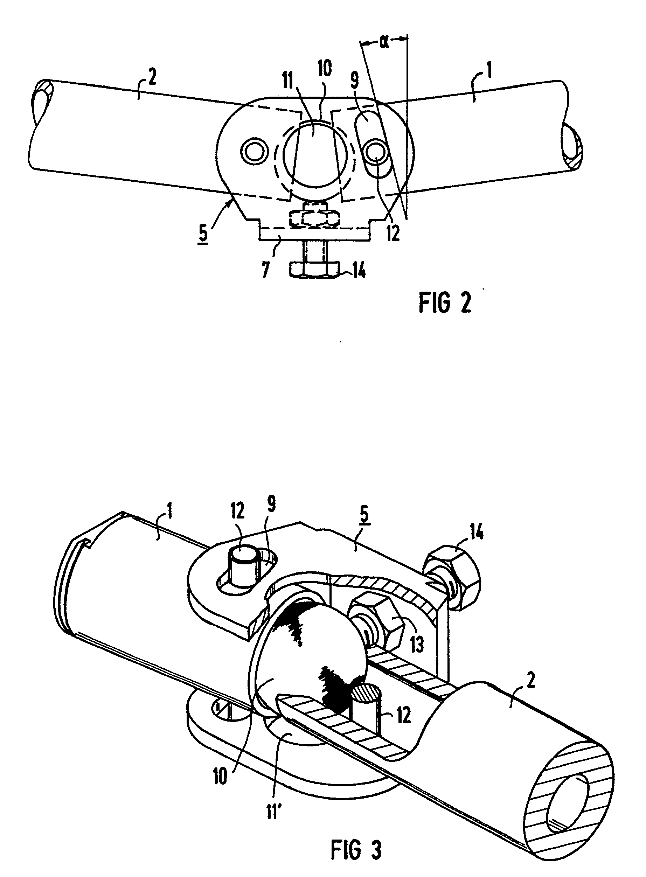

In Figur 2, welche die zusammengebaute Vorrichtung mit dem Verbindungsstück 5 mit trapezförmigem Umriß in einer Ansicht von oben zeigt, ist zu erkennen, daß der kleine Durchmesser der als Langloch ausgeführten zweiten Bohrung 9, 9' so gewählt ist, daß der durch die Bohrung greifende Spannstift 12 darin bewegbar ist. Der große Durchmesser des Langlochs der Bohrung 9, 9' schließt mit der Senkrechten auf die durch das Bodenteil 7 des Verbindungsstücks 5 gehenden Ebene einen Winkel α zwischen 5° und 20°, vorzugsweise 15°, ein. Erforderlichenfalls kann das Langloch auch mit nierenförmigem Umriß ausgeführt sein. Somit läßt sich die Mittelachse des Rohrs 1 unter einem vorgegebenen Winkel auf die Mittelachse des Rohrs 2 ausrichten. Durch Einschrauben der Schraube 14, deren Mittelachse etwa auf den Mittelpunkt der Stahlkugel 10 weist und deren Ende in kraftschlüssiger Verbindung mit der Stahlkugel 10 steht, lassen sich die Rohre 1 und 2 in der vorgegebenen Stellung gegeneinander verspannen.

Figur 3 zeigt perspektivisch die zusammengebaute Vorrichtung. Man erkennt, wie die Stahlkugel 10 zwischen den Rohren 1 und 2 mit Hilfe der Schraube 14 eingeklemmt ist. Die dritte Bohrung 11, 11', die lediglich als Montageerleichterung dient, liegt wieder frei.

## Ansprüche

1. Vorrichtung zur Verbindung zweier Rohre gleichen Durchmessers, deren Mittelachsen einen stumpfen Winkel einschließen, nach Art eines in einem U-förmigen Verbindungsstück angeordneten, feststellbaren Kugelgelenks, **dadurch gekennzeichnet, daß**

a) jedes Rohr (1, 2) an seiner Stirnseite konisch ausgebildet ist,

b) jedes Rohr (1, 2) im Abstand(a)von seiner Stirnseite mit einer Querbohrung (4) des Durchmessers (d3)versehen ist, deren Mittelachse auf einem Rohrdurchmesser liegt,

c) ein Verbindungsstück (5) mit U-förmigem Querschnitt vorgesehen ist, dessen parallele Wände (6, 6') einen das Einführen der Rohrenden von beiden Seiten erlaubenden Innenabstand aufweisen,

d) eine Stahlkugel (10) zwischen die Rohrenden im Verbindungsstück (5) eingefügt ist, deren Durchmesser (d4) kleiner oder gleich dem Außendurchmesser (d1) und größer als der Innendurchmesser (d2) der Rohre (1 und 2) ist,

e) durch die parallelen Seitenwände (6, 6') in den Endabschnitten des Verbindungsstücks (5) koaxiale und zueinander parallele Bohrungen führen, wobei

e1) eine erste Bohrung (8, 8') einen Durchmesser aufweist, der dem Durchmesser (d3)der Querbohrung (4) in den Rohren (1 und 2) entspricht, und

e2) eine zweite Bohrung (9, 9') als Langloch ausgeführt ist, dessen kleiner Durchmesser wenig größer ist als der Durchmesser (d3) der Querbohrung (4) und dessen großer Durchmesser mit der Senkrechten auf den Bodenteil (7) des Verbindungsstücks (5) einen Winkel(α)zwischen 5° und 20° einschließt, und

e3) der Abstand (b) der Mittelachsen der Bohrungen (8, 8' und 9, 9') kleiner ist als die Summe der Abstände (a) und des Kugeldurchmessers (d)4,

f) je ein Spannstift (12), dessen Länge dem Abstand der Außenfläche der parallelen Wände (6, 6') des Verbindungsstücks (5) entspricht, durch die erste und durch die zweite Bohrung (8, 8' ; 9, 9') im Verbindungsstück (5) und durch die fluchtende Querbohrung (4) des jeweiligen Rohrs (1 bzw. 2) gesteckt ist,

g) eine durch eine Gewindebohrung (13) im Bodenteil (7) des Verbindungsstücks (5) drehbare Schraube (14) mit ihrer Mittelachse etwa auf den Mittelpunkt der Stahlkugel (10) weist und mit dieser in kraftschlüssiger Verbindung steht.

2. Vorrichtung nach Anspruch 1, **dadurch gekennzeichnet**, daß das Langloch der zweiten Bohrung (9, 9') nierenförmig ist.

3. Vorrichtung nach Anspruch 1, **dadurch gekennzeichnet**, daß zwischen der ersten Bohrung (8, 8') und der zweiten Bohrung (9, 9') eine dritte Bohrung (11, 11') durch die parallelen Seitenwände (6, 6') des Verbindungsstücks (5) geführt ist, deren Durchmesser (d5) kleiner ist als der Durchmesser (d4) der Stahlkugel (10).

## Claims

1. Arrangement for the connection of two tubes of equal diameter, the central axes of which enclose an obtuse angle, in the nature of a ball-and-socket joint which is arranged in a U-shaped connection piece and can be fixed, characterised in that

a) each tube (1, 2) is formed so as to be conical on its end face ;

b) each tube (1, 2) is provided, with spacing (a) from its end face, with a cross bore (4) of the diameter (d3), the central axis of which lies on a tube diameter ;

c) there is provided a connection piece (5) with U-shaped cross section, the parallel walls (6, 6') of which have an inside spacing which permits the introduction of the tube ends from both sides ;

d) there is inserted between the tube ends in the connection piece (5) a steel ball (10), the diameter (d4) of which is smaller or equal to the outside diameter (d1) and greater than the inside diameter (d2) of the tubes (1 and 2) ;

e) coaxial bores, which are parallel to each other, lead through the parallel side walls (6, 6') in the end sections of the connection piece (5), where

e1) a first bore (8, 8') has a diameter corresponding to the diameter (d3) of the cross bore (4) in the tubes (1 and 2), and

e2) there is formed as an elongated hole a second bore (9, 9'), the small diameter of which is a little greater than the diameter (d3) of the cross bore (4) and the large diameter of which encloses, with the perpendicular on the base portion (7) of the connection piece (5), an angle (α) between 5° and 20°, and

e3) the spacing (b) of the central axes of the bores (8, 8' and 9, 9') is smaller than the sum of the spacings (a) and the ball diameter (d4) ;

f) a respective clamping pin (12), the length of which corresponds to the spacing of the outside surface of the parallel walls (6, 6') of the connection piece (5), is plugged through the first and through the second bore (8, 8' ; 9, 9') in the connection piece (5) and through the aligned cross bore (4) of the respective tube (1 or 2) ;

g) a screw (14), which can be turned through a threaded bore (13) in the base portion (7) of the connection piece (5), points with its central axis substantially to the central point of the steel ball (10) and communicates with the latter in force-locking connection.

2. Arrangement according to claim 1, characterised in that the elongated hole of the second bore (9, 9') is kidney-shaped.

3. Arrangement according to claim 1, characterised in that between the first bore (8, 8') and the second bore (9, 9') a third bore (11, 11') is run through the parallel side walls (6, 6') of the connection piece (5), the diameter (d5) of which third bore is smaller than the diameter (d4) of the steel ball 10 .

**Revendications**

1. Dispositif de raccordement de deux tubes de même diamètre, dont les axes forment un angle obtus entre eux, à la manière d'une rotule disposée dans une pièce de liaison en forme de U et que l'on peut bloquer,

caractérisé en ce que

a) le côté frontal de chaque tube (1,2) est conique,

b) chaque tube (1,2) est muni à distance (a) de son côté frontal d'un perçage transversal (4) de diamètre (d3), dont l'axe médian est situé sur un diamètre du tube,

c) il est prévu une pièce de liaison (5) de section transversale en forme de U, dont les parois (6, 6') parallèles ont un écartement intérieur permettant l'introduction des extrémités des tubes des deux côtés,

d) une bille en acier (10) est insérée entre les extrémités des tubes dans la pièce de liaison (5) et son diamètre (d4) est inférieur ou égal au diamètre extérieur (d1) et est supérieur au diamètre intérieur (d2) des tubes (1 et 2),

e) des perçages coaxiaux et parallèles entre eux traversent les parois latérales (6, 6') parallèles dans les sections d'extrémité de la pièce de liaison (5),

e1) un premier perçage (8, 8') ayant un diamètre qui correspond au diamètre (d3) du perçage transversal (4) ménagé dans les tubes (1 et 2), et

e2) un deuxième perçage (9, 9') étant constitué en bouton onière dont le petit diamètre est un peu plus grand que le diamètre (d3) du perçage transversal (4) et dont le grand diamètre fait, avec la perpendiculaire à l'âme (7) de la pièce de liaison (5), un angle (a) compris entre 5 ° et 20 °, et

e3) la distance (b) entre les axes médians des perçages (8, 8' et 9,9') est inférieure à la somme des distances (a) et du diamètre de la bille (d4),

f) des goupilles (12), dont la longueur correspond à la distance entre les surfaces extérieures des parois (6, 6') parallèles de la pièce de liaison (5), sont enfilées dans le deuxième perçage (8, 8',9, 9') de la pièce de liaison (5) et dans les perçages transversaux (4) alignés des tubes (1 et 2),

g) une vis (14), qui peut se visser dans un trou fileté (13) ménagé dans l'âme (7) de la pièce de liaison (5), a son axe médian dirigé sensiblement sur le centre de la bille en acier (10) et est en liaison avec celle-ci par coopération de force.

2. Dispositif selon la revendication 1, caractérisé en ce que la boutonnière du second perçage (9, 9') est en forme de haricot.

3. Dispositif selon la revendication 1, caractérisé en ce qu'entre le premier perçage (8, 8') et le deuxième perçage (9, 9') un troisième perçage (11, 11') traverse les parois latérales (6, 6') de la pièce de liaison, son diamètre (d5) étant inférieur au diamètre (d4) de la bille en acier (10).

FIG 1

FIG 2

FIG 3